(19) **Europäisches Patentamt / European Patent Office / Office européen des brevets**

(11) **EP 1 261 145 B1**

(12) **EUROPEAN PATENT SPECIFICATION**

(45) Date of publication and mention
of the grant of the patent:
**23.01.2008   Bulletin 2008/04**

(51) Int Cl.:
**H04B 7/005** (2006.01)

(21) Application number: **01304652.9**

(22) Date of filing: **25.05.2001**

(54) **Downlink transmission power control**

Sendeleistungsregelung für die Abwärtsrichtung

Commande de puissance de transmission de la liaison descendante

(84) Designated Contracting States:
**DE FR GB**

(43) Date of publication of application:
**27.11.2002   Bulletin 2002/48**

(73) Proprietor: **Lucent Technologies Inc.**
**Murray Hill, New Jersey 07974-0636 (US)**

(72) Inventors:
• **Cao, Qiang**
**Swindon,**
**Wiltshire SN2 3XL (GB)**
• **Charriere, Patrick**
**Tetbury GL8 8DR (GB)**

• **Davies, Richard Llewelyn**
**Corsham,**
**Wiltshire SN13 9JG (GB)**

(74) Representative: **Sarup, David Alexander et al**
**Alcatel-Lucent Telecom Limited**
**Unit 18, Core 3,**
**Workzone**
**Innova Business Park**
**Electric Avenue**
**Enfield, EN3 7XU (GB)**

(56) References cited:
EP-A- 1 081 977      EP-A- 1 081 978
WO-A-02/39609

**Description**

**Background**

The present invention relates to a telecommunications network, a method of adjusting maximum transmission power, a base station, and a radio network controller.

As is known from, for example 3$^{rd}$ Generation Partnership Project Technical Specifications documents TS25.433, TS25.214 and TS25.331, in, for example, a Universal Mobile Telephone Service (UMTS) network there are requirements to control the power of signals sent downlink from base stations (Node B's) to subscriber units (user equipment UE's) so as to minimise interference between signals to subscribers who share common frequency bands.

There is a requirement for so-called outer loop power control (OLPC) discussed in the above mentioned standards. In essence this relates to the slower rate (or courser) downlink transmission power control i.e. control of maximum downlink transmission power as compared to the inner loop power control relating to faster rate and finer adjustment.

It is known to locate the downlink transmission power control block in the UMTS Terrestrial Radio Access Network (UTRAN), specifically in a Radio Network Controller (RNC) of the UTRAN. This allows the radio network controller to set the downlink transmission power based on predicting the signal to interference radios (SIR) which should be acceptable for downlink transmissions to various subscriber units (UE). However, there is relatively more signalling required across the radio link (Uu interface) between base station (Node B) and subscriber units (UE) also more processing must be done by the radio network controller (RNC) than otherwise.

A known alternative is to locate the control block downlink transmission power in the respective subscriber units (UE's) themselves. In known downlink outer loop power control, the UE compares the measured SIR (SIR-estimate) against the SIR-target. If the SIR-estimate is less than the SIR-target, the UE sends a transmission power control command (TPC) to require the base station (UTRAN) to increase its transmission power. In this known approach, subscriber units (UE) have total control over the downlink transmit power from the UTRAN. Although advantageously allowing effects which degrade the downlink signal to be taken into account when determining the SIR-target in the subscriber unit, in particular in its RAKE receiver, and requiring relatively less signalling traffic between base stations (Node B) and subscriber unit (UE), there is at least one significant disadvantage to this known approach.

It is that manufacturers of subscriber units may set stricter than necessary SIR-targets resulting in higher than strictly necessary downlink transmission power levels to be used. The result would be significant interference which would be unpredictable and could be high.

EP-A-1 081 977 and EP-A-1081 978 describe arrangements in which a slow power control loop uses error measurements to calculate a SIR target and a fast power control loop uses a comparison of measured SIR with target SIR to adjust power transmission. WO 02/39609, published after the filing date of the present application, describes an arrangement in which the power level of a forward link is adjusted based on the number of frame errors in transmissions to a subscriber unit.

**Summary of the Invention**

The present invention provides a telecommunications network comprising a first unit and a second unit, the second unit comprising means operative to determine a value representative of the accuracy with which data is received from the first unit and to transmit said value to the first unit, the first unit being operative to adjust the maximum power with which the first unit sends data to the second unit dependent upon said value.

Preferably the first unit is a base station and the second unit is a subscriber unit, both operative to send data by radio, the maximum power which is adjusted being the maximum downlink power.

The present invention in its preferred embodiments solves the problem of subscriber units setting unnecessarily or unreasonably strict SIR targets resulting in unnecessarily or unreasonably high base station transmission powers and consequential interference problems.

Preferably the maximum downlink (DL) transmission power is not only set in initial Radio Link Setup stage, but is adjusted during the whole life cycle of a call to limit the base station UTRAN transmission power required by subscriber units UE.

Preferably the maximum downlink DL power is repeatedly adjusted during the whole life cycle of a call to limit the UTRAN transmission power required to transmit to the subscriber unit UE.

Preferably an information element (value) representing maximum downlink power for the UTRAN is used to dynamically adjust (i.e. adjust 'on the fly' i.e. during the call) downlink transmission power to a particular subscriber unit. This advantageously prevents a 'selfish UE' from requiring more than necessary transmission power by setting an unreasonable SIR-target irequiring higher than necessary downlink power in order to be satisfied. The UTRAN transmission power is a finite resource so a 'selfish UE' if allowed to be selfish would request more power at the expense of other UE's.

The present invention also provides a method of adjusting maximum power in a call between a first unit and a second unit in a telecommunications network, comprising the steps of:

the second unit determining a value representative of the accuracy with which data is received from the first unit,

the second unit transmitting said value to the first unit,

the first unit adjusting the maximum power with which the first unit sends data to the second unit dependent upon said value.

The present invention also provides a base station comprising means operative to receive from a subscriber unit a value representative of the accuracy with which data sent downlink from the base station was received, the base station further comprising means operative to adjust the maximum downlink power for further downlink data transmissions dependent upon said value.

The present invention also provides a radio network controller (RNC) comprising comparator means operative to process a value representative of accuracy with which data was received by a subscriber unit by comparing said value to at least one threshold, and dependent upon the outcome of the or each comparison generating a control signal for adjusting maximum downlink transmission power of a transmitter/receiver station (Node B).

## Brief Description of the Drawings

A preferred embodiment of the present invention will now be described, by way of example, and with reference to the Figures, in which:

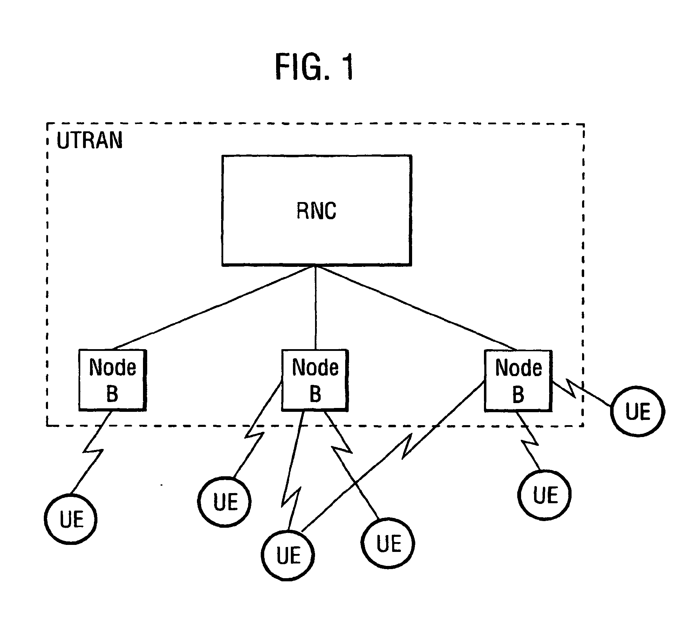

Figure 1 is a diagram illustrating the UMTS network,
Figure 2 is a diagram illustrating the sequence of communication steps (denoted 1 to 10) in establishing a call and controlling downlink transmission power during the call, and
Figure 3 illustrates in more detail operation of the block in the (serving) radio network controller (SRN) controlling maximum downlink power, in other words it illustrates in more detail step 8 as shown in Figure 2.

## Detailed Description of Preferred Embodiments

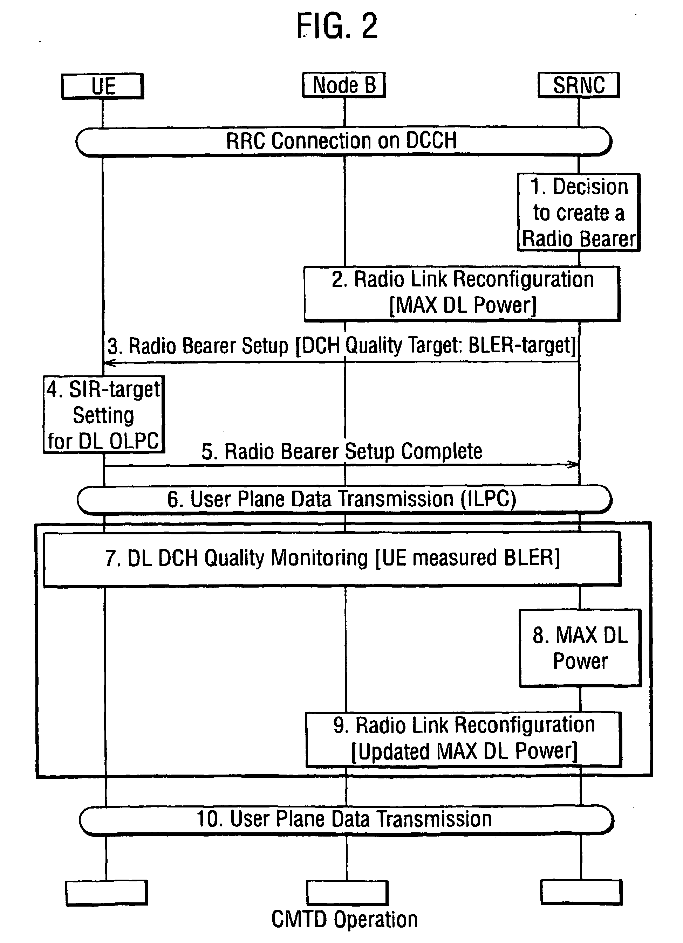

As shown in Figure 2, the transmittter/receiver station (Node B), its controlling (serving) radio network controller (SRNC) and any particular subscriber unit (UE) with which a call is to be established operate as follows:

1. A radio resource control (RRC) connection having been set up on a dedicated control channel (DCCH), in other words, a signalling channel, a decision is made to create a radio bearer, i.e. set up a call.

2. The SRNC sends the value of the maximum downlink transmission power allowed for that call to the Node B. The allowed power value depends on the type of service (data, voice, video), and the type of subscriber unit so is service-and UE-specific.

3. As part of the radio bearer set up, a downlink reception quality target, namely a block error rate (BLER) target, is sent downlink to the UE on the dedicated channel (DCH) which is the channel dedicated to carry the call.

4. Based on the received BLER target (or received BLER targets for different types of service (voice, data,fax etc)) the signal interference ratio (SIR) required by the UE is determined. This depends on the construction of the UE. As required by the UMTS standard there is a BLER target required for each type of service (e.g., voice, fax, data, video) which can be handled.

5. The UE indicates via the Node B to the SRNC that call set up is complete.

6. User data is now transmitted.

Whilst user data is being transmitted (shown as step 6 and step 10 in Figure 2), functions 7 to 9 as shown in Figure 2 are operative as follows:

7. The UE periodically reports its BLER-estimate for each dedicated channel (DCH).

8. The UTRAN decides whether or not the downlink transmission power should be adjusted (e.g.down) by examining the reported BLER-estimate over a reasonable period of time.

9. If the UTRAN makes such a decision, the RNC will inform the Node B to adjust its maximum downlink transmission power by sending RADIO LINK RECONFIGURATION REQUEST including information element (IE) 'Maximum DL power' to be used for transmission to the particular subscriber unit.

Steps 7 to 9 occur repeatedly and automatically during the course of the call.

The maximum downlink power level is adjusted in steps, the size of which are set by the radio network controller (SRNC). A step is, for example, at least 0.1dB when used in the range 35dB to 15dB to achieve a fast adjustment. (A minimum power step size is defined in the UMTS 3$^{rd}$ Generation Partnership project standard as being 0.1 dB in that power range).

Downlink transmission power adjustment

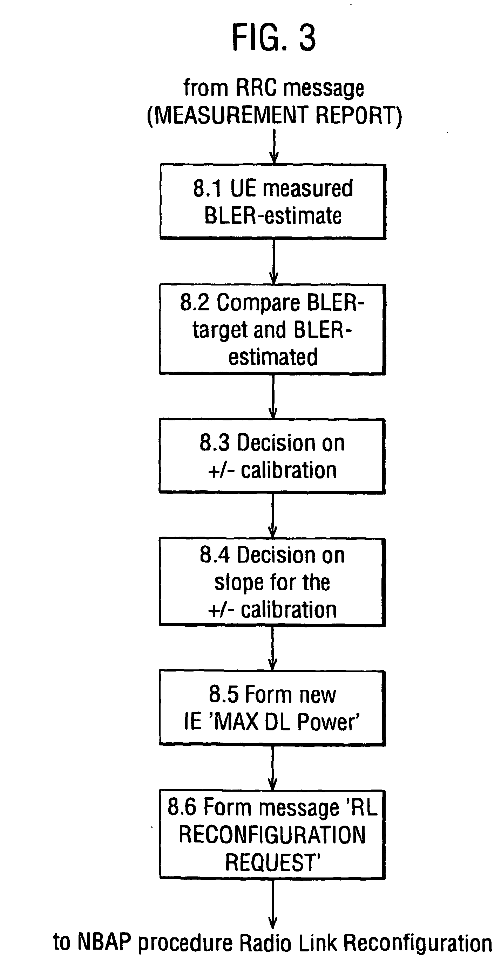

The functional stage 8 shown in Figure 2 is shown in more detail in Figure 3,and is as follows:

8.1 The radio network controller RNC extracts the information element IE 'BLER-estimate' (where BLER is block error rate) from the radio resource control RRC message 'MEASUREMENT REPORT' received from the subscriber unit. The RRC message is periodically reported from the UE to the RNC, reasonably frequently such that the RNC can make a judgement e.g. as to whether the subscriber unit's UE BLER implying that UTRAN transmission power is excessive.

8.2 The RNC compares the BLER-target set by the RNC and the BLER-estimate measured by the UE to assist the RNC in making a decision whether downlink power adjustment is required.Each type of call has an associated BLER target so as to ensure acceptable quality of service. Thus, for example, calls of the type carrying voice only payload data have different thresholds to those carrying, e.g. video.

8.3 The RNC decides if a '+' or '-' i.e. up or down adjustment is necessary. This is based on the comparison in the previous step 8.2. Note that in some embodiments whether adjustment is needed or not can be quite a complicated question in difficult radio environments. In these scenarios, the controlled adjustment can be used as precaution to prevent downlink transmission power from becoming excessive and/or reducing such power if it too became excessive.

8.4 The RNC decides the step (or slope) for the adjustment. The recursive algorithm is given as

$$P \max (t) = P \max (t - 1) + s. \Delta\, step$$

where P max (t) is the maximum downlink power level to the subscriber unit UE for time t, P max (t -1) is the maximum downlink power level to the subscriber unit UE for the previous time step (t -1) and s is a + or - sign function decided in section 8.3, and $\Delta\, step$ is power update step for changing maximum downlink transmission power. The value of $\Delta\, step$ is set depending on the following factors: frequency of the RRC message "MEASUREMENT REPORTING", the BLER-estimate (a worse BLER-estimate requires or bigger adjustment step), accuracy of the adjustment, time delay of the adjustment, service type (e.g. voice, data, etc), service data rate, service combination (e.g. multimedia or single service type), and radio environment (multipath fading, and weather).

8.5 The RNC decides the new value of *P* max. This is done by calculation as mentioned in 8.4 above. *P* max is translated to the information element IE representing maximum DL transmission power.

8.6 The RNC constructs the message RADIO LINK RECONFIGURATION including the information element IE for max DL transmission power and sends it to the Node B to adjust the Node B maximum downlink transmission power.

**Claims**

1. A telecommunications network comprising a first unit (Node B) and a second unit (UE), the second unit (UE) comprising means operative to determine a value representative of the accuracy with which data is received from the first unit (Node B) and **characterised by** the second unit (UE) being arranged to transmit said value to the first unit (Node B) and the maximum power with which the first unit (Node B) sends data to the second unit (UE) being arranged to be adjusted dependent upon said value.

2. A telecommunications network according to claim 1, in which the first unit is a base station (Node B) and the second unit is a subscriber unit (UE), both operative to send data by radio, the maximum power which is adjusted being the maximum downlink power.

3. A telecommunications network according to claim 1 or claim 2, in which the value is a measure of Block Error rate, BLER.

4. A telecommunications network according to any preceding claim, in which the maximum power, P max, is adjusted downwards dependent upon whether the value is below a predetermined threshold.

5. A telecommunications network according to any preceding claim, in which the maximum power, P max, is adjusted upwards dependent upon whether the value is above a predetermined threshold.

6. A telecommunications network according to claim 4 or claim 5, in which the threshold(s) are selected dependent upon the type of payload data carried in the call.

7. A telecommunications network according to any preceding claim, in which the maximum power, P max, is adjusted by increasing or decreasing maximum power by a discrete step, $\Delta$ step, should adjustment be determined as being required.

8. A telecommunications network according to claim 6 in which the maximum downlink power, P max, is adjusted according to the relation:

$$P \max (t) = P \max (t-1) + s. \ \Delta \ step$$

where t is the current adjustment step in time, t-1 is the last adjustment step in time, s is + or - dependent on whether the maximum power is to be increased or decreased, and $\Delta$step is the step change in maximum power to be applied.

9. A telecommunications network according to any preceding claim, in which the steps of determining the value, transmitting the value to the first unit (Node B) and adjusting the value are repeated during a call between the first unit (Node B) and second unit (UE).

10. A telecommunications network according to any preceding claim which is a UMTS network or other third generation network.

11. A telecommunications network according to claim 10 which comprises a radio network controller (RNC) and at least one transmitter/receiver station (Node B) under the control of the controller, the controller being operative to instruct the transmitter/receiver station(s) (Node B) to adjust maximum downlink transmission power dependent on said value(s).

12. A telecommunications network according to claim 10 or claim 11, in which the maximum power which is adjusted is the outer loop maximum power.

13. A method of adjusting maximum downlink power in a call between a first unit (Node B) and a second unit (UE) in a telecommunications network, comprising the steps of:

the second unit (UE) determining a value representative of the accuracy with which data is received from the first unit (Node B), and **characterised by**

the second unit (UE) transmitting said value to the first unit (Node B),
the first unit (Node B)adjusting the maximum power with which the first unit (Node B)sends data to the second unit (UE) dependent upon said value.

**14.** A base station (Node B) **characterised by** means operative to receive from a subscriber unit (UE) a value representative of the accuracy with which data sent downlink from the base station (Node B) was received, and the base station (Node B) further comprising means operative to adjust the maximum downlink power for further downlink data transmissions dependent upon said value.

**15.** A base station according to claim 14 comprising a radio network controller (RNC) and at least one transmitter/receiver station (Node B) which operates under the control of the radio network controller, the radio network controller being operative to instruct the transmitter/receiver station(s) to adjust maximum downlink transmission power dependent upon said value(s) received.

**16.** A radio network controller (RNC) **characterised by** comparator means operative to process a value representative of accuracy with which data was received by a subscriber unit (UE) by comparing said value to at least one threshold, and dependent upon the outcome of the or each comparison generating a control signal for adjusting maximum downlink transmission power of a transmitter/receiver station (Node B).

**Patentansprüche**

**1.** Telekommunikationsnetz mit einer ersten Einheit (Knoten B) und einer zweiten Einheit (UE), wobei die zweite Einheit (UE) Mittel zum Bestimmen eines Wertes umfaßt, der für die Genauigkeit repräsentativ ist, mit der die Daten von der ersten Einheit (Knoten B) empfangen werden, und **gekennzeichnet dadurch, daß** die zweite Einheit (UE) zum Übertragen dieses Wertes zur ersten Einheit (Knoten B) angeordnet ist und die Höchstleistung, mit der die erste Einheit (Knoten B) Daten zur zweiten Einheit (UE) sendet, angeordnet ist, in Abhängigkeit von diesem Wert eingestellt zu werden.

**2.** Telekommunikationsnetz nach Anspruch 1, wobei die erste Einheit eine Basisstation (Knoten B) ist und die zweite Einheit eine Teilnehmereinheit (UE) ist, die beide Daten mit Funk senden können, dessen Höchstleistung als die maximale Leistung auf der Abwärtsstrecke eingestellt ist.

**3.** Telekommunikationsnetz nach Anspruch 1 oder Anspruch 2, wobei der Wert ein Maß der Blockfehlerrate BLER (Block Error rate) ist.

**4.** Telekommunikationsnetz nach einem vorhergehenden Anspruch, wobei die Höchstleistung P max in Abhängigkeit davon, ob der Wert unter einem vorbestimmten Schwellwert liegt, abwärts eingestellt wird.

**5.** Telekommunikationsnetz nach einem vorhergehenden Anspruch, wobei die Höchstleistung P max in Abhängigkeit davon, ob der Wert über einem vorbestimmten Schwellwert liegt, aufwärts eingestellt wird.

**6.** Telekommunikationsnetz nach Anspruch 4 oder Anspruch 5, wobei der (die) Schwellwert(e) in Abhängigkeit von der Art von in der Verbindung geführten Nutzlastdaten ausgewählt wird (werden).

**7.** Telekommunikationsnetz nach einem vorhergehenden Anspruch, wobei die Höchstleistung P max durch Erhöhen oder Erniedrigen der Höchstleistung um einen diskreten Schritt, Δ-Schritt, eingestellt wird, sollte bestimmt werden, daß Einstellung erforderlich ist.

**8.** Telekommunikationsnetz nach Anspruch 6, wobei die Höchstleistung auf der Abwärtsstrecke P max entsprechend dem Verhältnis eingestellt wird:

```
P max (t) = P max (t-1) + s. Δ-Schritt
```

wobei t der aktuelle zeitliche Einstellungsschritt ist, t-1 der letzte zeitliche Einstellungsschritt ist, s + oder - ist, in Abhängigkeit davon, ob die Höchstleistung erhöht oder erniedrigt werden soll, und Δ-Schritt die anzulegende schrittweise Veränderung der Höchstleistung ist.

9. Telekommunikationsnetz nach einem vorhergehenden Anspruch, wobei die Schritte des Bestimmens des Wertes, Übertragen des Wertes zur ersten Einheit (Knoten B) und Einstellen des Wertes während einer Verbindung zwischen der ersten Einheit (Knoten B) und zweiten Einheit (UE) wiederholt werden.

10. Telekommunikationsnetz nach einem vorhergehenden Anspruch, das ein UMTS-Netz oder sonstiges Netz der dritten Generation ist.

11. Telekommunikationsnetz nach Anspruch 10, das eine Funknetzsteuerung (RNC - radio network controller) und mindestens eine Sender-/Empfängerstation (Knoten B) unter der Kontrolle der Steuerung umfaßt, wobei die Steuerung die Sender-/Empfängerstation(en) (Knoten B) anweisen kann, die maximale Sendeleistung auf der Abwärtsstrecke in Abhängigkeit von dem (den) Wert(en) einzustellen.

12. Telekommunikationsnetz nach Anspruch 10 oder Anspruch 11, wobei die eingestellte Höchstleistung in der äußeren Höchstleistungsschleife ist.

13. Verfahren zum Einstellen der Höchstleistung auf der Abwärtsstrecke in einer Verbindung zwischen einer ersten Einheit (Knoten B) und einer zweiten Einheit (UE) in einem Telekommunikationsnetz, mit folgenden Schritten:

Bestimmen durch die zweite Einheit (UE) eines Wertes, der für die Genauigkeit repräsentativ ist, mit der Daten von der ersten Einheit (Knoten B) empfangen werden, und **gekennzeichnet durch** Übertragen des Wertes **durch** die zweite Einheit (UE) zur ersten Einheit (Knoten B),
Einstellen **durch** die erste Einheit (Knoten B) der Höchstleistung, mit der die erste Einheit (Knoten B) Daten zur zweiten Einheit (UE) sendet, in Abhängigkeit von diesem Wert.

14. Basisstation (Knoten B) **gekennzeichnet durch** Mittel zum Empfangen von einer Teilnehmereinheit (UE) eines Wertes, der für die Genauigkeit repräsentativ ist, mit der von der Basisstation (Knoten B) auf der Abwärtsstrecke gesendete Daten empfangen wurden, und
wobei die Basisstation (Knoten B) weiterhin Mittel zum Einstellen der Höchstleistung auf der Abwärtsstrecke für weitere Datenübertragungen auf der Abwärtsstrecke in Abhängigkeit von diesem Wert umfaßt.

15. Basisstation nach Anspruch 14, mit einer Funknetzsteuerung (RNC - radio network controller) und mindestens einer Sender-/Empfängerstation (Knoten B), die unter Kontrolle der Funknetzsteuerung fungiert, wobei die Funknetzsteuerung die Sender-/Empfängerstation(en) anweisen kann, die maximale Sendeleistung auf der Abwärtsstrecke in Abhängigkeit von dem (den) empfangenen Wert(en) einzustellen.

16. Funknetzsteuerung (RNC) **gekennzeichnet durch** Vergleichermittel zum Verarbeiten eines Wertes, der für Genauigkeit repräsentativ ist, mit der Daten **durch** eine Teilnehmereinheit (UE) empfangen wurden, **durch** Vergleichen des Wertes mit mindestens einem Schwellwert, und Erzeugen in Abhängigkeit von dem Ergebnis des oder jedes Vergleichs eines Steuersignals zum Einstellen der maximalen Sendeleistung auf der Abwärtsstrecke einer Sender-/ Empfängerstation (Knoten B).

## Revendications

1. Réseau de télécommunications comprenant une première unité (Noeud B) et une deuxième unité (UE), la deuxième unité (UE) comprenant un moyen servant à déterminer une valeur représentative de la précision avec laquelle des données sont reçues depuis la première unité (Noeud B) et **caractérisé par** l'agencement de la deuxième unité (UE) pour transmettre ladite valeur à la première unité (Noeud B) et l'agencement de la puissance maximum avec laquelle la première unité (Noeud B) envoie des données à la deuxième unité (UE) pour qu'elle soit réglée en fonction de ladite valeur.

2. Réseau de télécommunications selon la revendication 1, dans lequel la première unité est une station de base (Noeud B) et la deuxième unité est une unité d'abonné (UE), les deux servant à envoyer des données par radio, la puissance maximum qui est réglée étant la puissance maximum de liaison descendante.

**3.** Réseau de télécommunications selon la revendication 1 ou la revendication 2, dans lequel la valeur est une mesure du Taux d'Erreurs sur les Blocs, BLER.

**4.** Réseau de télécommunications selon l'une quelconque des revendications précédentes, dans lequel la puissance maximum, P max, est réglée vers le bas selon que la valeur est en dessous d'un seuil prédéterminé.

**5.** Réseau de télécommunications selon l'une quelconque des revendications précédentes, dans lequel la puissance maximum, P max, est réglée vers le haut selon que la valeur est au-dessus d'un seuil prédéterminé.

**6.** Réseau de télécommunications selon la revendication 4 ou la revendication 5, dans lequel le ou les seuils sont sélectionnés en fonction du type de données de charge utile acheminées dans l'appel.

**7.** Réseau de télécommunications selon l'une quelconque des revendications précédentes, dans lequel la puissance maximum, P max, est réglée en augmentant ou en diminuant la puissance maximum par un pas discret, pas Δ, s'il est déterminé qu'un réglage est nécessaire.

**8.** Réseau de télécommunications selon la revendication 6, dans lequel la puissance maximum de liaison descendante, P max, est réglée conformément à la relation :

$$P\ max\ (t) = P\ max\ (t-1) + s.\ pas\ \Delta$$

où t est le pas de réglage courant dans le temps, t-1 est le dernier pas de réglage dans le temps, s est + ou - dépendant de l'augmentation ou de la diminution de la puissance maximum, et pas Δ est le changement de pas de la puissance maximum à appliquer.

**9.** Réseau de télécommunications selon l'une quelconque des revendications précédentes, dans lequel les étapes de détermination de la valeur, de transmission de la valeur à la première unité (Noeud B) et de réglage de la valeur sont répétées durant un appel entre la première unité (Noeud B) et la deuxième unité (UE).

**10.** Réseau de télécommunications selon l'une quelconque des revendications précédentes, lequel est un réseau UMTS ou autre réseau de troisième génération.

**11.** Réseau de télécommunications selon la revendication 10, qui comprend un contrôleur de réseau radio (RNC), et au moins une station émettrice-réceptrice (Noeud B) sous la commande du contrôleur, le contrôleur servant à instruire la ou les stations émettrices-réceptrices (noeud B) de régler la puissance d'émission maximum de liaison descendante en fonction de ladite ou desdites valeurs.

**12.** Réseau de télécommunications selon la revendication 10 ou la revendication 11, dans lequel la puissance maximum qui est réglée est la puissance maximum de boucle externe.

**13.** Procédé de réglage de la puissance maximum de liaison descendante dans un appel entre une première unité (Noeud B) et une deuxième unité (UE) dans un réseau de télécommunications, comprenant les étapes de :

détermination par la deuxième unité (UE) d'une valeur représentative de la précision avec laquelle des données sont reçues depuis la première unité (Noeud B), et **caractérisé par**
la transmission par la deuxième unité (UE) de ladite valeur à la première unité (Noeud B),
le réglage par la première unité (Noeud B) de la puissance maximum avec laquelle la première unité (Noeud B) envoie des données à la deuxième unité (UE) en fonction de ladite valeur.

**14.** Station de base (Noeud B) **caractérisée par** un moyen servant à recevoir depuis une unité d'abonné (UE) une valeur représentative de la précision avec laquelle des donnes envoyées sur la liaison descendante depuis la station de base (Noeud B) ont été reçues, et
la station de base (Noeud B) comprenant en outre un moyen servant à régler la puissance maximum de liaison descendante d'autres transmissions de données de liaison descendante en fonction de ladite valeur.

**15.** Station de base selon la revendication 14, comprenant un contrôleur de réseau radio (RNC), et au moins une station émettrice-réceptrice (Noeud B) qui fonctionne sous la commande du contrôleur de réseau radio, le contrôleur de réseau radio servant à instruire la ou les stations émettrices-réceptrices de régler la puissance d'émission maximum de liaison descendante en fonction de ladite ou desdites valeurs reçues.

16. Contrôleur de réseau radio (RNC) **caractérisé par** un moyen de comparateur servant à traiter une valeur représentative de la précision avec laquelle des données ont été reçues par une unité d'abonné (UE) en comparant ladite valeur à au moins un seuil, et en fonction du résultat de la ou de chaque comparaison en générant un signal de commande pour régler la puissance d'émission maximum de liaison descendante d'une station émettrice-réceptrice (Noeud B).

# FIG. 1

# FIG. 2

| UE | Node B | SRNC |
|---|---|---|

RRC Connection on DCCH

1. Decision to create a Radio Bearer

2. Radio Link Reconfiguration [MAX DL Power]

3. Radio Bearer Setup [DCH Quality Target: BLER-target]

4. SIR-target Setting for DL OLPC

5. Radio Bearer Setup Complete

6. User Plane Data Transmission (ILPC)

7. DL DCH Quality Monitoring [UE measured BLER]

8. MAX DL Power

9. Radio Link Reconfiguration [Updated MAX DL Power]

10. User Plane Data Transmission

CMTD Operation

# FIG. 3

from RRC message
(MEASUREMENT REPORT)

8.1 UE measured
BLER-estimate

8.2 Compare BLER-
target and BLER-
estimated

8.3 Decision on
+/- calibration

8.4 Decision on
slope for the
+/- calibration

8.5 Form new
IE 'MAX DL Power'

8.6 Form message 'RL
RECONFIGURATION
REQUEST'

to NBAP procedure Radio Link Reconfiguration

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1081977 A
- EP 1081978 A
- WO 0239609 A